Europäisches Patentamt

European Patent Office

Office européen des brevets

(19)

(11) Numéro de publication : **0 190 960**
**B1**

(12) **FASCICULE DE BREVET EUROPÉEN**

(45) Date de publication du fascicule du brevet :
06.07.88

(51) Int. Cl.⁴ : **B 62 D 5/08**, B 62 D 5/22

(21) Numéro de dépôt : 86400121.9

(22) Date de dépôt : 22.01.86

(54) Direction assistée hydraulique pour véhicule automobile.

(30) Priorité : 29.01.85 FR 8501475

(43) Date de publication de la demande :
13.08.86 Bulletin 86/33

(45) Mention de la délivrance du brevet :
06.07.88 Bulletin 88/27

(84) Etats contractants désignés :
DE GB IT

(56) Documents cités :
EP-A- 0 072 712
EP-A- 0 112 249
EP-A- 0 147 290
FR-A- 2 193 938

(73) Titulaire : **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur : **Bordier, Jean**
**70, rue René Boulanger**
**F-75010 Paris (FR)**
Inventeur : **Camus, Gérard**
**15, rue des Bouchères**
**F-95240 Cormeilles-en-Parisis (FR)**

(74) Mandataire : **Boivin, Claude**
**9, rue Edouard-Charton**
**F-78000 Versailles (FR)**

## Description

La présente invention concerne une direction assistée hydraulique pour véhicule automobile comprenant un arbre de commande monté à rotation dans un boîtier et lié au volant, un arbre suiveur, également monté pivotant dans ce boîtier et relié mécaniquement à un pignon en prise avec la crémaillère de direction, des moyens élastiques reliant l'arbre de commande et l'arbre suiveur de sorte qu'il se produit un déplacement et l'arbre suiveur de sorte qu'il se produit un déplacement angulaire relatif des deux arbres lorsqu'un couple est exercé sur l'arbre de commande, un distributeur hydraulique sensible à ce déplacement relatif, et un vérin d'assistance sur l'alimentation duquel est interposé le distributeur et dont l'élément mobile est relié à la crémaillère.

Le brevet européen 0 072 712 décrit une direction assistée hydraulique pour véhicule automobile, qui comprend un arbre de commande lié au volant et relié par une barre de torsion à un arbre suiveur qui porte un pignon en prise avec la crémaillère de direction.

Des parties de l'arbre de commande et de l'arbre suiveur constituent les éléments d'un distributeur rotatif qui est interposé sur l'alimentation d'un vérin d'assistance.

Lorsque le conducteur exerce un couple sur le volant, l'arbre de commande pivote élastiquement par rapport à l'arbre suiveur de sorte que le distributeur est actionné et envoie du liquide au vérin d'assistance de façon à déplacer la crémaillère de direction dans le sens correspondant au sens de pivotement du volant.

On connaît également des directions assistées dans lesquelles le distributeur est à tiroir, qui est plus fiable. Mais l'utilisation du distributeur à tiroir dans la direction assistée connue par le brevet européen ci-dessus pose des problèmes techniques, car il est difficile et compliqué, dans cette direction assistée de transformer le déplacement angulaire relatif des deux arbres de commande et suiveur en un mouvement de translation du tiroir du distributeur. Le brevet FR-A-2 193 938 (correspondant au préambule de la revendication 1) décrit de son côté une direction assistée dans laquelle le capteur de couple comprend un arbre de commande constituant un premier élément de transmission, un deuxième élément de transmission solidaire en rotation de l'arbre suiveur, et un élément de transmission intermédiaire coopérant par une liaison cannelée avec l'arbre de commande et relié au tiroir d'un distributeur à tiroir et par des fils métalliques élastiques au second élément de transmission. Mais cette direction assistée présente des frottements et est peu précise.

Le document EP-A-0 147 290 décrit une direction assistée hydraulique pour véhicule automobile du type décrit ci-dessus dans lequel l'élément intermédiaire est relié au premier élément de transmission par un second jeu de lames flexibles qui sont dirigées obliquement en sens inverse par rapport aux lames flexibles du premier jeu. Ce document, publié le 03.07.85, fait partie de l'état de la technique défini par l'article 54 (3) CBE.

La présente invention a pour objet une direction assistée hydraulique pour véhicule automobile, du type mentionné plus haut, qui est à distributeur à tiroir et dans laquelle le mouvement du tiroir du distributeur est réalisé de manière très simple sans qu'il y ait un déplacement axial de l'arbre de commande.

La direction assistée selon l'invention est caractérisée en ce que l'élément intermédiaire est relié au premier élément de transmission par une second jeu de lames flexibles qui sont dirigées obliquement en sens inverses par rapport aux lames flexibles du premier jeu, et en ce que l'élément intermédiaire comporte, à sa périphérie, une gorge dans laquelle est engagée l'une des extrémités en forme de rotule d'un levier monté pivotant par rapport au boîtier, l'autre extrémité de ce levier étant reliée par une bielle au tiroir du distributeur.

Lorsqu'un couple est exercé sur l'arbre de commande, ce couple est transmis par des lames flexibles à l'élément intermédiaire qui le transmet à son tour à l'arbre suiveur. Lors de cette transmission, les lames flexibles reliant l'élément intermédiaire ou l'un des éléments d'extrémité, augmentent d'inclinaison alors que celles reliant cet élément intermédiaire à l'autre élément d'extrémité se redressent. Par suite, l'élément intermédiaire se déplace axialement dans un sens ou dans l'autre suivant le sens du couple, en se rapprochant de l'un des éléments d'extrémité et en s'éloignant de l'autre. Cet élément intermédiaire entraîne le tiroir du distributeur par l'intermédiaire du levier de sorte que le vérin d'assistance est mis en service et fait pivoter l'arbre suiveur dans le même sens que l'arbre de commande jusqu'à ce que le couple ait disparu.

Les éléments de transmission peuvent être constitués par des disques ou plateaux.

Le distributeur peut être constitué de deux demi-distributeurs disposés de part et d'autre du levier et dont les tiroirs sont reliés à ce levier. Il est alors possible d'appliquer d'une manière équilibrée sur les deux faces libres des tiroirs une contre-pression modulée en fonction d'un paramètre par exemple là vitesse du véhicule.

On a décrit ci-après, à titre d'exemples non limitatifs, deux modes de réalisation de la direction assistée selon la présente invention, avec référence aux dessins annexés dans lesquels :

La figure 1 est un schéma général de la direction assistée ;

La figure 2 est une vue en coupe axiale du boîtier d'assistance, dans un premier mode de réalisation ;

La figure 3 en est une coupe transversale suivant III-III de la Figure 2 ;

La figure 4 est une vue en perspective montrant l'élément de transmission intermédiaire et les lames flexibles qui lui sont fixées ;

La figure 5 montre en coupe axiale un détail de la Figure 2, lorsqu'un couple est exercé sur l'arbre de commande ;

La figure 6 est une vue en coupe axiale du boîtier d'assistance, dans un second mode de réalisation, dans lequel il est prévu deux demi-distributeurs.

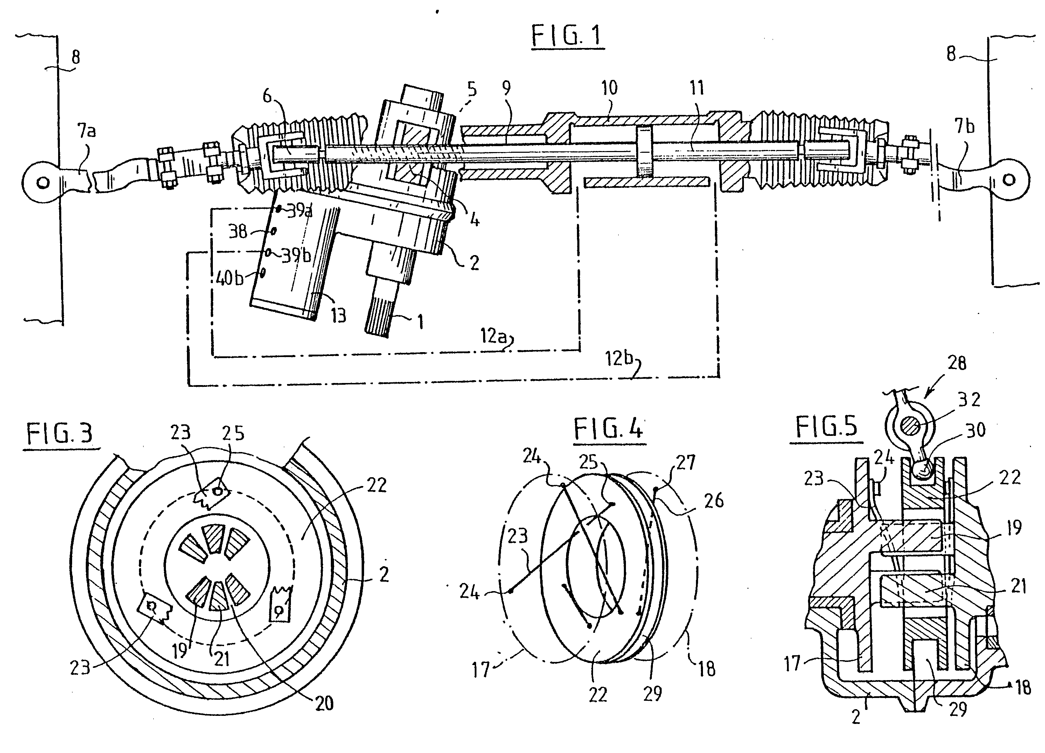

Dans la direction assistée représentée schématiquement à la figure 1, un arbre 1 lié à la colonne de direction est monté à rotation dans un boîtier 2 est est relié de la manière décrite plus loin à un arbre suiveur 3, coaxial à l'arbre 1, portant un pignon 4 et également monté pivotant dans le boîtier 2. Ce pignon est en prise avec une crémaillère 5 sur l'une des extrémités de laquelle est articulée en 6 une timonerie 7a reliée à l'une des roues directrices 8 du véhicule. L'autre extrémité de la crémaillère est reliée à l'une des tiges de piston 9 d'un vérin d'assistance, à double effet 10, dont l'autre tige de piston 11 est reliée par une timonerie articulée 7b à l'autre roue directrice 8. Le vérin 10 est relié par des conduites 12a et 12b à un distributeur 13, à tiroir coulissant, fixé au boîtier 2.

Comme on le voit plus particulièrement à la Figure 2, l'arbre 1 est monté à rotation dans le boîtier 2 par l'intermédiaire d'un palier anti-friction 14. De son côté, l'arbre suiveur 3 est monté à rotation dans le boîtier par l'intermédiaire d'un roulement à billes 15 et d'un roulement à aiguilles 16. Les deux arbres 1 et 3 portent à leur extrémité des plateaux respectivement 17 et 18 qui sont parallèles et disposés en vis-à-vis. Le plateau 17 porte des pattes 19 entre lesquelles sont engagées avec un jeu 20 des pattes 21 du plateau 18. En cas de défaillance du système d'assistance, l'arbre 1 peut ainsi, après rattrapage du jeu 20, entraîner l'arbre suiveur 3, donc le pignon 4 et la crémaillère de direction 5.

Entre les plateaux 17 et 18 se trouve un troisième plateau 22 parallèle aux plateaux 17 et 18 et relié au plateau 17 par des lames élastiques tarées 23 qui sont ici au nombre de trois et décalées les unes des autres de 120° autour de l'axe de la colonne de direction. Ces lames sont fixées à l'une de leurs extrémités en 24 à la périphérie du plateau 17 et à leur extrémité opposée en 25, à la périphérie du plateau 22, par exemple par des rivets ou des vis ou par ancrage. Elles sont disposées obliquement aussi bien par rapport au plan du plateau 22 que par rapport aux rayons passant par leurs points de fixation 25 sur ce plateau.

De manière analogue, les plateaux 18 et 22 sont liés l'un à l'autre par des lames élastiques tarées 26 qui sont disposées obliquement en étant fixées en 25 à la périphérie du plateau 22 et en 27 à la périphérie du plateau 18.

Les lames 26 sont disposées en sens contraire des lames 23, c'est-à-dire que deux lames 23 et 26 fixées à un même endroit 25 du plateau intermédiaire 22 forment l'une avec l'autre un V, symétriquement par rapport à ce plateau intermédiaire 22. Les plateaux 17, 18 et 22 et les lames élastiques 23 et 26 constituent un dispositif 28 qui assure à la fois la détection de couple exercé sur l'arbre 1 et la liaison élastique de cet arbre à l'arbre 3.

Le plateau 22 est muni d'un alésage axial traversé par les pattes 19 et 21. Il comporte à sa périphérie une gorge 29 dans laquelle est engagée l'une des extrémités 30, en forme de rotule, d'un levier 31 articulé en 32 par rapport au boîtier 2. L'autre extrémité 33, également en forme de rotule, du levier 31 est reliée par une biellette 34 et une rotule 35 au tiroir 36 du distributeur 13.

Le distributeur 13 est agencé selon la disposition dite à « centre fermé » qui convient lorsque le véhicule est équipé d'un réservoir d'huile sous pression régulée. Le tiroir 36 comporte trois portées 37a, 37b et 37c qui coopèrent avec un perçage central 38 relié au réservoir sous pression, deux perçages 39a et 39b reliés aux conduits d'utilisation 12a et 12b, et deux perçages 40a et 40b reliés à l'échappement.

A la Figure 2, le distributeur 13 est en position d'équilibre. Le circuit haute pression est isolé par la portée 37b du tiroir et les conduits d'utilisation 12a et 12b sont reliés respectivement aux échappements 40a et 40b. Un déplacement longitudinal du tiroir 36 dans un sens ou dans l'autre, à partir de sa position d'équilibre, a pour effet d'isoler l'un des circuits d'échappement et de relier le circuit d'utilisation correspondant à la haute pression pendant que l'autre circuit d'utilisation reste à l'échappement.

Mais le distributeur 13 pourrait être également agencé à « centre ouvert », dans le cas où l'alimentation serait assurée par une pompe à huile débitant en permanence.

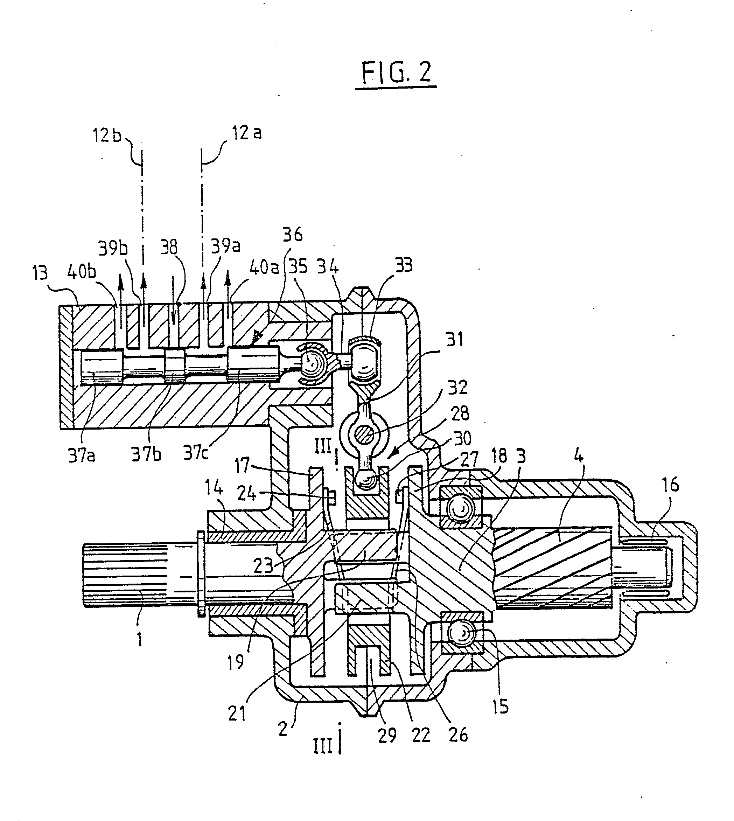

Lorsque le conducteur manœuvre le volant et fait ainsi pivoter l'arbre 1, le couple exercé sur le plateau 17 entraîne un déplacement axial du plateau 22. Si le couple est exercé dans le sens des lames 23, le plateau repousse ces lames, qui se détendent. Le plateau 22 se déplace en faisant pivoter le levier 31 ; celui-ci entraîne la bielle 34 qui se déplace axialement vers le distributeur 13 (Figure 5). Le plateau 22 repousse à son tour les lames 26 qui fléchissent. Si le couple est exercé en sens contraire, le plateau 22 se rapproche du plateau 17 et la bielle 34 s'éloigne du distributeur 13.

Comme les lames 23 fléchissent lorsque les lames 26 se redressent, et inversement, les lames 23 aussi bien que les lames 26 interviennent pour assurer les liaisons élastiques entre l'arbre de commande 1 et l'arbre suiveur 3.

Lorsque le plateau 22 se déplace, le tiroir 36 du distributeur est entraîné par la bielle 34. L'un des conduits d'utilisation 12a ou 12b est mis en communication avec la haute pression de sorte que le piston du vérin 10 se déplace en entraînant la crémaillère 5 et par suite la tringlerie de direction. Le pignon 4 pivote en entraînant le plateau 18 qui tend à reprendre sa position angulaire initiale par rapport au plateau 17. L'arbre 3 suit ainsi le mouvement de pivotement de l'arbre 1.

Lorsque le couple cesse d'être exercé sur l'arbre de commande 1, le plateau 22 reprend sa position neutre et les deux circuits d'utilisation 12a et 12b sont de nouveau tous deux isolés de sorte que la crémaillère de direciton 5 reste dans la position dans laquelle elle a été amenée.

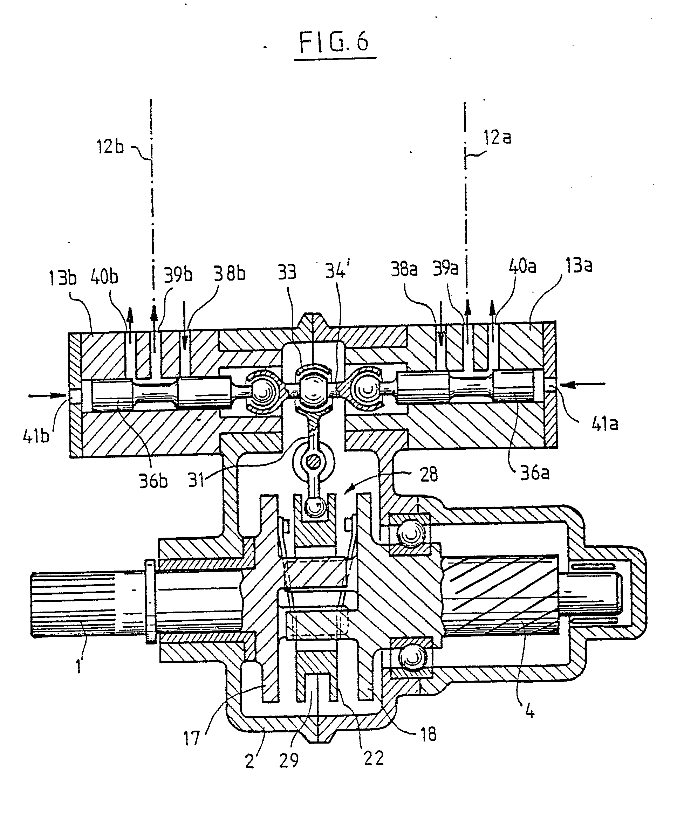

Dans le mode de réalisation de la Figure 6, le distributeur 13 a été remplacé par deux demi-distributeurs 13a et 13b disposés de part et d'autre du détecteur de couple 28 et comportant chacun un demi-tiroir 36a ou 36b relié l'un à l'autre par la bielle 34'. La portion centrale de cette bielle est reliée par la rotule 33 au levier 31.

Les portées du tiroir 36a coopèrent avec un perçage 38a relié au réservoir sous pression, un perçage 39a relié au conduit d'utilisation 12a, et un perçage 40a relié à l'échappement. De manière analogue, les portées du tiroir 36b coopèrent avec un perçage 38b relié au réservoir sous pression, un perçage 39b relié au conduit 12b, et un perçage 40b relié à l'échappement.

L'alésage de chaque demi-distributeur est, du côté de la face libre du demi-tiroir, en communication par un perçage 41a ou 41b avec une source de contre-pression modulée en fonction d'un paramètre donné, par exemple la vitesse du véhicule. Cela permet d'accroître l'effort au volant pour un même angle de braquage, quand la vitesse du véhicule augmente.

## Revendications

1. Direction assistée pour véhicule automobile comprenant un arbre de commande (1) monté à rotation dans un boîtier (2) et lié au volant, un arbre suiveur (3) également monté pivotant dans ce boîtier et relié mécaniquement à un pignon (4) en prise avec la crémaillère de direction (5), un capteur de couple reliant les deux arbres et comportant un arbre de sortie mobile axialement, un distributeur hydraulique (13 ou 13a-13b) à tiroir dont le tiroir (31, 31a ou 31b) est relié à l'élément de sortie du détecteur de couple, et un vérin d'assistance (10) sur l'alimentation duquel est interposé le distributeur et dont l'élément mobile est relié à la crémaillère (5), dans laquelle le capteur de couple comprend un premier élément de transmission d'extrémité (17 ou 17a) solidaire en rotation de l'arbre de commande (1), un deuxième élément de transmission d'extrémité (18 ou 18a) solidaire en rotation de l'arbre suiveur (3) coaxial au premier, et fixe axialement par rapport à celui-ci, et un troisième élément de transmission intermédiaire (22) qui est coaxial aux deux premiers et est relié au tiroir (31, 31a ou 31b) du distributeur (13, 13a ou 13b), cet élément intermédiaire étant en outre relié au second élément de transmission (18 ou 18a) par un premier jeu (26) de lames flexibles dirigées obliquement caractérisé en ce que cet élément intermédiaire est relié au premier élément de transmission (17 ou 17a) par un second jeu (23) de lames flexibles qui sont dirigées obliquement en sens inverse par rapport aux lames flexibles du premier jeu (26), et en ce que l'élément intermédiaire (22) comporte, à sa périphérie, une gorge (29) dans laquelle est engagée l'une des extrémités en forme de rotule (30) d'un levier (31) monté pivotant par rapport au boîtier (2), l'autre extrémité de ce levier étant reliée par une bielle (34 ou 34') au tiroir (36-36a ou 36b) du distributeur.

2. Direction assistée selon la revendication 1, caractérisée en ce que le premier élément de transmission (17) et le second (18) sont constitués par des disques ou plateaux disposés en vis-à-vis, chacun des plateaux portant des pattes (19 ou 21) engagées avec un jeu (20) entre des pattes (21 ou 19) de l'autre plateau.

3. Direction assistée selon la revendication 2, caractérisée en ce que les deux arbres de commande (1) et suiveur (3) sont coaxiaux.

4. Direction assistée selon l'une des revendications 1 à 3, caractérisée en ce que le distributeur est constitué de deux demi-distributeurs (13a et 13b) disposés de part et d'autre du levier 31 et dont les tiroirs (36a et 36b) sont reliés à ce levier.

5. Direction assistée selon la revendication 4, caractérisée par des moyens pour appliquer sur les deux faces libres des tiroirs (36a et 36b) une contre-pression modulée en fonction d'un paramètre, par exemple la vitesse du véhicule.

## Claims

1. Convertible machine with sequential machining phases comprising at least one machining unit (1), but preferably two machining units disposed opposite each other, a machining table (2) which is provided with a rotary indexable plate and means for fixing supports for workpieces to be machined which are disposed opposite the machining unit or between the two machining units, conveyors (5a and 5b) adapted for bringing and/or removing supports on which the workpieces to be machined are fixed, a magazine (8) for machining boxes or heads (9) which can be fitted to the machining units and transport means adapted for seizing the boxes (9) in the magazine (8) and bringing them close to the machining unit or units as well as then returning them to the magazine, characterized by an intermediate circuit for housing workpiece supports in batches, this circuit comprising the machining table and comprising in a closed circuit several stations for temporarily housing supports connected together by advancing means, so that the machining table may receive, without involving the conveyors, a number of successive workpieces at most equal to that of the temporary housing stations.

2. Machine according to claim 1, characterized in that the internal machining circuit includes a lowering means (13) for bringing a workpiece which has just undergone a machining operation to a level situated below the machining table (2), work zones (14, 15), and a lifting means (6) for bringing the workpiece to the level of the table.

3. Machine according to claim 1 or 2, characterized in that it comprises two conveyors (5a, 5b) disposed parallel to the machining units, distribution means for causing each workpiece to pass from a conveyor to the machining circuit and from this machining circuit to a conveyor.

4. Machine according to one of claims 1 to 3, characterized in that the machining circuit is situated in a plane perpendicular to the axis of the machining units.

5. Machine according to one of claims 1 to 4, characterized in that each machining unit (1) is provided on each side with at least two waiting tables or stations (12) for the boxes (9) waiting to be used and the boxes waiting to be returned to the magazine.

## Patentansprüche

1. Servolenkung für Kraftfahrzeug mit einer drehbar in einem Gehäuse (2) montierten und mit dem Lenkrad verbundenen Antriebswelle (1), einer ebenfalls drehbar in diesem Gehäuse montierten Folgewelle (3), die mechanisch mit einem Ritzel (4) verbunden ist, das mit der Lenkzahnstange (5) in Eingriff steht, einem die beiden Wellen verbindenden Drehmomentfühler, der eine in axialer Richtung bewegliche Abtriebswelle aufweist, einem hydraulischen Verteiler (13 oder 13a bzw. 13b) mit einem Schieber (31, 31a oder 31b), der mit dem Ausgangselement des Drehmomentaufnehmers verbunden ist und einer Hilfswinde (10), in deren Zuleitung der Verteiler eingeschaltet ist und deren bewegbares Element mit der Zahnstange (5) verbunden ist, bei welcher der Drehmomentfühler ein mit der Antriebswelle (1) in Bezug auf Drehung kraftschlüssig verbundenes erstes Endübertragungselement (17 oder 17a), ein mit der Folgewelle (3) in Bezug auf Drehung kraftschlüssig verbundenes und koaxial zum ersten und in Bezug auf dieses in axialer Richtung fest angeordnetes zweites Endübertragungselement (18 oder 18a) und ein zwischengeschaltetes drittes Übertragungselement (22) aufweist, das koaxial zu den beiden ersten Elementen angeordnet ist und mit dem Schieber (31, 31a und 31b) des Verteilers (13, 13a oder 13b) verbunden ist, wobei dieses zwischengeschaltete Element außerdem mit dem zweiten Übertragungselement (18 oder 18a) durch eine erste Gruppe (26) von schräg ausgerichteten flexiblen Lamellen verbunden ist, dadurch gekennzeichnet, daß dieses zwischengeschaltete Element mit dem ersten Übertragungselement (17 oder 17a) durch eine zweite Gruppe (23) von flexiblen Lamellen verbunden ist, die im entgegengesetzten Sinne in Bezug auf die flexiblen Lamellen der ersten Gruppe (26) schräg ausgerichtet sind und daß das zwischengeschaltete Element (22) an seiner Peripherie eine Nut (29) aufweist, in welche ein als Kugelgelenk (30) ausgebildetes Ende eines Hebels (31) eingreift, der gegenüber dem Gehäuse (2) drehbar angeordnet ist und dessen anderes Ende über eine Pleuelstange (34 oder 34') mit dem Schieber (36-36a oder 36b) des Verteilers verbunden ist.

2. Servolenkung nach Anspruch 1, dadurch gekennzeichnet, daß das erste und zweite Übertragungselement (17 bzw. 18) durch einander gegenüberliegend angeordnete Scheiben oder Platten gebildet sind, wobei jede der Platten Klauen (19 oder 21) aufweist, die mit einem Spiel (20) zwischen die Klauen (21 oder 19) der anderen Platte eingreifen.

3. Servolenkung nach Anspruch 2, dadurch gekennzeichnet, daß die Antriebswelle (1) und die Folgewelle (3) koaxial zueinander angeordnet sind.

4. Servolenkung nach einem der Ansprüche 1 bis 3, dadurch gekennzeichnet, daß der Verteiler durch zwei Halbverteiler (13a und 13b) gebildet wird, die zu beiden Seiten des Hebels (31) angeordnet sind und deren Schieber (36a und 36b) mit diesem Hebel verbunden sind.

5. Servolenkung nach Anspruch 4, gekennzeichnet durch Mittel, um an die beiden freien Flächen der Schieber (36a und 36b) einen Gegendruck anzulegen, der in Abhängigkeit von einem Parameter, z. B. der Fahrzeuggeschwindigkeit, moduliert ist.

FIG.1

0 190 960

FIG.3

FIG.4

FIG.5

## FIG. 2

## FIG. 6